# EUROPEAN PATENT APPLICATION

(11) **EP 1 627 681 A1**
(43) Date of publication of application: **22.02.2006**
(21) Application number: 05107658.6
(22) Date of filing: 19.08.2005
(51) Int. Cl.: B01J 19/12

(54) **Method and instrument for low temperature microwave assisted organic chemical synthesis**

(30) Priority: 20.08.2004 US 923302
(71) Applicant: CEM Corporation, Matthews NC 28106-0200 (US)
(72) Inventor: Barnhardt, E. Keller, 28211, Charlotte (US); Hargett, Jr., Wyatt P., NC North Carolina 28105 (US); Thomas, James Edward, 28075, Harrisburg (US)
(74) Representative: Bankes, Stephen Charles Digby

(57) **Abstract**

An instrument (10) and associated method are disclosed for performing microwave assisted organic chemical synthesis at low temperatures. The instrument (10) includes a reaction vessel (20) formed of a microwave transparent material that defmes an interior reaction chamber (17) for carrying out microwave assisted reactions in the chamber, a cooling jacket (22) immediately surrounding the reaction vessel for cooling the vessel and the vessel (20) contents during the application of microwave energy (25) to contents in the vessel when a microwave transparent media used as a fluid coolant is present in the jacket. The instrument includes means (18) for supplying a microwave transparent fluid coolant to the cooling jacket and means (19) for venting the fluid coolant from the cooling jacket (22), a fluid coolant reservoir (59) in communication with the cooling jacket, and a pump (61) in communication with the reservoir (59) and the cooling jacket (22) for circulating fluid coolant from the fluid coolant reservoir through the cooling jacket and around the reaction vessel.

## Description

The present invention relates to microwave assisted chemistry techniques and instruments, and in particular, relates to a method and instrument for low temperature microwave assisted organic chemical synthesis.

The present application is related to each of the following pending applications: U.S. Patent Application Publication Nos. 20020102738, 20030170149, 20040101441, and 20030199099; and U.S. Patent Nos. 6,744,024 and 6,867,400.

Microwave assisted organic chemical synthesis refers to the use of electromagnetic radiation within the microwave frequencies to provide the energy required to initiate, drive, or accelerate certain chemical reactions. As chemists have long been aware, the application of heat energy (thermal transfer) is one of the most significant factors in increasing the rate of a wide variety of chemical reactions. Thus, generally familiar devices such as the Bunsen burner, other types of gas burners, hot plates, and other similar devices have historically been used to initiate or accelerate various chemical reactions.

Microwave assisted reactions, however, transfer energy to chemical reactions in a different, much faster manner than the conductive devices mentioned above. As will be understood by those of ordinary skill in the art, microwave energy directly interacts with polar or ionic molecules. This effect, known as dipole rotation, is a result of the polar or ionic molecules trying to align themselves with the rapidly changing electric field of the microwaves.

The rotational movement of molecules as they try to orient themselves with the electric field creates localized superheating and generates thermal energy as a byproduct. Microwave energy transfer is very rapid, producing localized high instantaneous temperatures (Tᵢ) around polar species while the bulk temperature (T_{b}) of the solution (or other composition or mixture) remains lower. Thus, the rapid energy transfer characteristic of microwave energy can cause instantaneous temperatures to be greater than the bulk temperature (Tᵢ > T_{b}) over short time periods. In contrast, localized instantaneous temperatures are generally the same as the bulk temperature (Tᵢ = T_{b}) for the slower energy transfer associated with conductive heating methods.

Microwave energy is known to greatly accelerate the reaction rate of many chemical reactions, and generate comparable or superior product in terms of yield and purity. The Tᵢ > T_{b} relationship is an advantage for microwave energy because microwave energy can deposit a large amount of energy into a reaction before thermal energy accumulates. Thereafter, thermal energy raises T_{b} beyond a critical point for a given reaction, resulting in excess thermal energy. Excess thermal energy will increase the T_{b} of a reaction. Although this is desirable in some circumstances, it can also have detrimental effects on heat-sensitive reactions or compositions.

For example, excess thermal energy can drive side reactions that degrade the reactants, catalysts, and desired product(s) of the desired reaction. Some reagents, such as n-butyl lithium, are useful in the production of optically pure isomers but are highly reactive *(i.e.,* hard to control) at room temperature. Furthermore, some products may be unstable at room temperature, favoring a cis- or trans- conformation in certain temperature ranges.

A useful goal in such circumstances is to exploit the rapid energy transfer property of microwave energy while maintaining a low bulk reaction temperature. Such an approach would utilize the vastly accelerated reaction rate provided by microwave energy while minimizing or eliminating the detrimental effects of the thermal energy byproduct.

For example, Bose, *et al*., (Bose, A., *et al*., *Heterocycles* 1990, 30:2, pp 741-744) describe microwave assisted organic chemical synthesis inside an ice-encased reaction vial. In this experiment, the reaction rate was greatly accelerated while yield and purity was comparable to conventional heating methods. Also, Melucci, *et al*. (Melucci, M., *et al., J. Org. Chem*., 2002, 67:25, pp 8877-8884) utilized microwave irradiation with a carefully controlled maximum reaction temperature of 70-80° C to synthesize thiophene oligomers.

One major limitation of these experiments, however, is their practical application in a laboratory or industrial setting. It is not always feasible to encase reaction vials in ice, and simply controlling microwave assisted reaction temperature may not be sufficient to avoid the detrimental effects of excess thermal energy.

In other experiments conducted by Chen and Deshpande (Chen, J.J.; Deshpande, S.V. *Tetrahedron Lett.,* 2003, 44, pp 8873), simultaneous cooling during microwave irradiation was used to synthesize α-ketoamides, a class of protease inhibitors useful for the treatment of stroke, Alzheimer's Disease, and Muscular Dystrophy. Chen and Deshpande demonstrated superior product yield using simultaneous cooling during microwave irradiation over conventional methods and the use of microwaves without simultaneous cooling.

The beneficial effects of simultaneous cooling during microwave irradiation are also useful for chemical synthesis with solid phase supports. Humphrey, *et al*., (Humphrey, C.E., *et al., J. Org. Lett.,* 2003, 5, pp 849) discovered higher release levels of the desired amides from the solid phase resin during simultaneous cooling compared to microwave heating alone.

Chen, Deshpande, and Humphrey, *et al*., performed their research using simultaneous cooling during microwave irradiation technology developed at CEM Corporation (Matthews, NC, USA), the assignee of the present invention. This research was conducted on CEM's DISCOVER™ instrument, aspects of which are set forth in one or more of the copending and commonly assigned U.S. applications noted above. This technology, although state of the art, is not designed to maintain reactions below ambient temperatures. As mentioned above, some reactants and products are unstable even at ambient temperatures and need to be maintained below ambient temperatures. Furthermore, a more robust cooling mechanism would allow for increased input of microwave power without excess thermal energy.

These experiments, although generally successful, have been limited with respect to sample size and cooling ability. These experiments are, however, evidence that microwave assisted chemical synthesis at low temperature is advantageous for reducing or eliminating the adverse effects of excess thermal energy.

Therefore, a need exists for methods and corresponding equipment for performing microwave assisted organic chemical synthesis at low temperatures for reactants, catalysts, and products that are stable at below ambient temperatures. There is further a need for a method to perform microwave assisted organic chemical synthesis at low temperatures to allow for increased energy input without the disadvantages of excess thermal energy, such as degradation of solid phase supports and increased reaction time.

There is further a need for a method to perform microwave assisted organic chemical synthesis at low temperatures in a controlled, isolated environment. Furthermore, there is a need for a compact, economical instrument that carries out microwave assisted organic chemical synthesis at low temperatures and with a wide range of volumes.

It is an object of the present invention to provide an instrument for performing microwave assisted organic chemical synthesis at low temperatures.

It is further an object of the present invention to provide an instrument for maintaining a reaction vessel at low temperatures with a microwave transparent media during the application of microwave energy to the contents in the vessel. The microwave transparent media is preferably a nonpolar fluid used as a coolant, and more preferably a nonpolar liquid.

It is further an object of the present invention to provide an instrument for cooling the reaction vessel by circulating coolant from a coolant reservoir through a supply tube, a cooling jacket, and a return tube to the coolant reservoir.

It is further an object of the present invention to provide an instrument capable of maintaining an air- and water-free environment for microwave assisted organic chemical synthesis at low temperature.

It is further an object of the present invention to provide a method for microwave assisted low temperature chemical reactions in which the reaction vessel is cooled with coolant to a temperature of between about -108° C and 40° C, and preferably between about -60° C and 30° C.

It is further an object of the present invention to provide a method for microwave assisted low temperature chemical reactions in which coolant circulates from a coolant reservoir around a reaction vessel to thereby cool the reaction vessel, and returns the coolant to the coolant reservoir.

It is further an object of the present invention to provide a method for microwave assisted low temperature chemical reactions in which microwaves are applied to the compositions in the reaction vessel while simultaneously circulating coolant around the reaction vessel.

It is further an object of the present invention to provide a method of adding additional components during a microwave assisted low temperature chemical reaction via glassware attachments to the reaction vessel.

According to an aspect of the present invention there is provided an instrument for performing low temperature microwave assisted organic chemical synthesis, said instrument comprising: a source of microwave radiation; a cavity in microwave communication with said source; a microwave transparent reaction vessel in said cavity; a cooling jacket surrounding said reaction vessel for cooling said vessel to thereby maintain a composition in said vessel at a desired moderate or low temperature while microwave energy is applied to the composition; a reservoir of microwave transparent fluid coolant; means for supplying said fluid coolant from said coolant reservoir to said cooling jacket; and means for venting said fluid coolant from said cooling jacket.

According to another aspect of the present invention there is provided a method for microwave assisted low temperature chemical reactions, comprising the steps of: a) cooling a microwave transparent reaction vessel to a desired temperature by contacting the reaction vessel with a microwave transparent media used as a fluid coolant; and b) applying microwave energy to the composition in the reaction vessel while simultaneously circulating the microwave transparent media used as a fluid coolant around the reaction vessel.

The foregoing and other objects and advantages of the invention and the manner in which the same are accomplished will become clearer based on the following detailed description taken in conjunction with the accompanying drawings in which:

Figure 1 is a perspective view of an instrument and vessel assembly according to the present invention.

Figure 2 is a partially schematic, cross-sectional diagram of the reaction vessel and reaction cavity of the present invention.

Figure 3 is a cutaway diagram illustrating internal and external components of the reaction vessel housing.

Figure 4 is a rear perspective view of the instrument housing.

Figure 5 is a partially schematic, cross-sectional diagram of the pump housing.

Figure 6 is a graph comparing dimethylformamide (DMF) irradiation with and without cooling fluid.

Figure 7 illustrates a substitution reaction between a dichlorobutene and a phenoxide anion and the cis- isomer product.

Figure 8 illustrates a ring expansion reaction resulting in the formation of either a cycloheptanone or cyclohexanone ring derivative.

In a first embodiment, the invention is an instrument 10 for performing microwave assisted organic synthesis at low temperatures. The term "low temperatures" is used herein in an explanatory rather than a descriptive sense. In that sense, it generally (but not exclusively) refers to temperatures of about 25 °C ("room temperature") or lower.

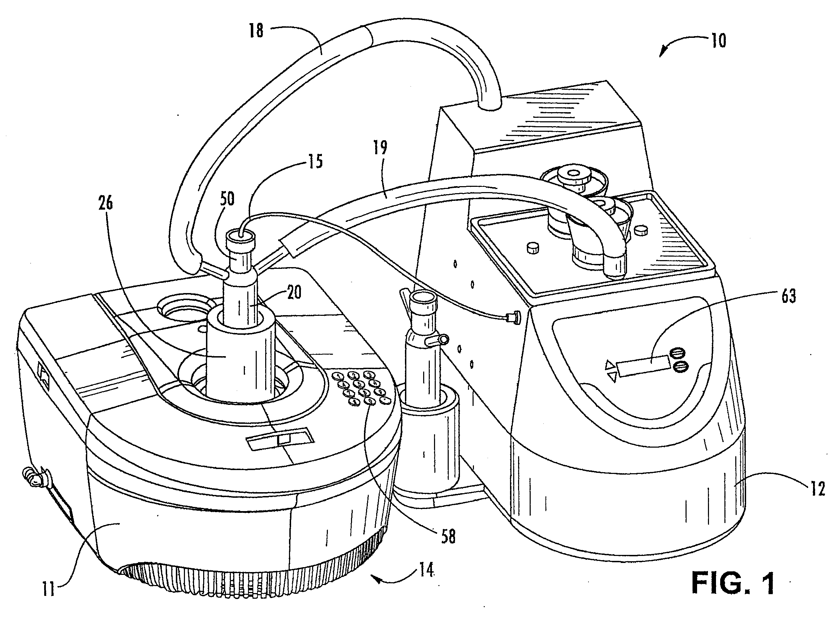

The instrument 10 is broadly illustrated in FIG. 1. The instrument 10 includes a microwave instrument housing 11 (*e.g*., CEM's aforementioned DISCOVER™ instrument) and a pump housing 12, typically made of rugged plastic or metal. The housings 11,12 protect internal components described herein. The housings 11,12 are vented with slotted apertures 14 to facilitate cooling of the internal components. Figure 1 further illustrates a fiber optic temperature sensor 15 for monitoring the temperature inside a reaction vessel 20. Figure 1 also depicts a supply tube 18 and a vent tube 19 for supplying and venting, respectively, fluid coolant to the reaction vessel 20.

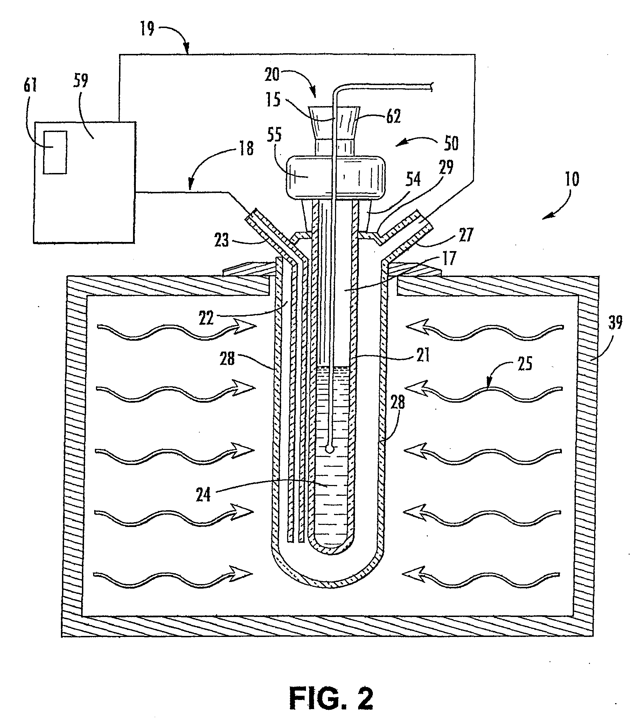

The reaction vessel 20 is illustrated in cross-section in FIG. 2. The reaction vessel 20 is a test tube shaped device having a reaction vessel wall 21 formed of a microwave transparent material and defines an interior reaction chamber 17 for microwave assisted reactions. In preferred embodiments the interior reaction chamber 17 has a volume (sometimes referred to as the "working volume") of at least about 0.25 milliliters, which is a convenient size for bench-top experiments. It will be understood that the invention is not volume-limited, and that larger vessels can be used as may be necessary or desired. Suitable microwave transparent materials are well known to those of ordinary skill in the art, and include, for example, quartz, glass, and PYREX®.

The instrument 10 further includes a cooling jacket 22. The cooling jacket 22 is defined by the space within a cooling jacket wall 28 that is likewise formed of a microwave transparent material and generally surrounds the vessel wall 21. The cooling jacket 22 immediately surrounds the reaction vessel 20 for cooling the vessel 20 and the vessel contents 24 (*i.e*., compositions) during the application of microwave energy 25 to the contents 24. Cooling the vessel 20 is effected when a microwave transparent media used as a fluid coolant is present in the cooling jacket 22. In this manner, the cooling jacket 22 surrounding the reaction vessel acts as a heat sink for the reaction vessel 20 and its contents 24. In other words, the cooling jacket 22 helps maintain lower temperatures in the interior reaction chamber 17.

Typically, even at low temperatures, microwave assisted organic reactions generate gases as products or byproducts. Accordingly, the reaction vessel 20 must be able to withstand the accompanying pressure, which can approach 300 pounds per square inch (psi, or about 21 bar). A number of materials are appropriate for such vessels with glass, quartz, and various engineering polymers being most suitable for a number of reasons. These include (in addition to microwave transparency) their resistance to acids, bases, solvents and organic compositions. Generally speaking, such appropriate vessel materials are well established and well understood in this art and will not be otherwise described in detail herein.

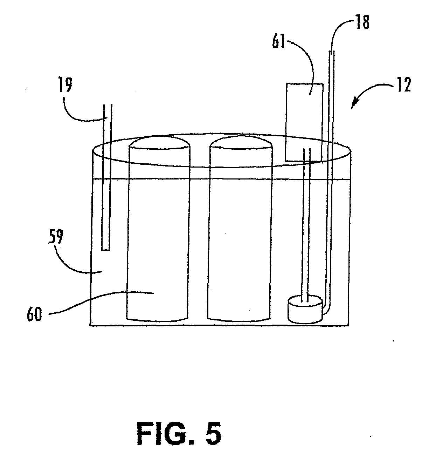

Depicted in FIG. 2, the cooling jacket 22 includes a mechanism for supplying fluid coolant to the cooling jacket 22, shown as a supply tube 18 in physical communication with the cooling jacket 22 and with a coolant reservoir 59. The supply tube 18 feeds the cooling jacket 22 via the coolant entry tube 23. The coolant entry tube 23 projects into and near the bottom of the cooling jacket 22 such that coolant is first delivered near the bottom of the cooling jacket 22 and thus the reaction vessel 20. This initially places the coolant in a favorable location; that is, about the contents 24 in the interior reaction chamber 17. The coolant flows into and occupies the cooling jacket 22 and subsequently exits the cooling jacket 22 via a venting mechanism. The venting mechanism includes a vent tube schematically illustrated at 19. The vent tube 19 is in physical communication with the cooling jacket 22 via the coolant exit tube 27 and with the coolant reservoir 59. The reservoir 59 is further in physical communication with a pump 61 (see also FIG. 5). The pump 61 circulates the fluid coolant from the fluid coolant reservoir 59 through the cooling jacket 22 and around the reaction vessel 20. Alternatively, the reservoir 59 can be integrated with the pump 61. Yet another alternative for encouraging fluid coolant flow is a gravity feed coolant reservoir (not shown), or a positive displacement mechanism such as a pump injector (not shown).

The fluid coolant is a microwave transparent media that remains in the liquid state and flows easily at the desired low temperatures, *e.g*., in the range of about -108° C to 40° C, more preferably in the range of about -60° C to 30° C. This prevents the unnecessary and unwanted accumulation of heat in the media as it circulates through the cooling jacket 22. The microwave transparent media is a nonpolar fluid, and preferably a nonpolar liquid. In preferred embodiments, nonpolar liquids used as coolant in the present invention are selected from the group consisting of hexane, carbon tetrachloride, and polyfluorinated hydrocarbons such as the heat transfer fluids offered by Solvay Solexis, Inc. of Thorofare, New Jersey, with Galden® HT55 being particularly preferred.

Microwave transparent media flows from the coolant reservoir 59 through the supply tube 18 and the coolant entry tube 23 into the cooling jacket 22 surrounding the reaction vessel 20. The coolant then exits the cooling jacket 22 via the coolant exit tube 27 and the vent tube 19. In a typical embodiment, fluid flow of the coolant is aided by a pump 61 in physical communication with at least the supply tube 18. The pump 61 may further physically communicate with the supply tube 18 and the vent tube 19 simultaneously; however, such a closed system design is not necessary to appreciate the benefits of the invention.

Figure 2 also depicts a temperature sensor 15 for monitoring the temperature within the reaction vessel 20. A suitable temperature sensor for this purpose is a fiber optic temperature sensor 15. The temperature sensor 15 is positioned in the interior reaction chamber 17 as this has been found to provide consistent and accurate measurements. With respect to the method of the invention, the monitored temperature can be used to moderate the application of microwaves when the microwave source and the temperature sensor are in electronic communication with and controlled by a computer microprocessor. This aspect of the invention is hereinafter explained in more detail.

In another aspect, the invention is a method for microwave assisted low temperature chemical reactions. In this embodiment, the invention includes the step of cooling a microwave transparent vessel to a desired temperature by contacting the vessel with a microwave transparent media used as a fluid coolant. The step of contacting the vessel with fluid coolant includes surrounding the vessel with coolant. This is accomplished using fluid flow through the cooling jacket.

The step of contacting the vessel with a microwave transparent media used as coolant includes using a nonpolar liquid. In preferred embodiments, a suitable nonpolar liquid is a microwave transparent media that remains in the liquid state and flows easily at the desired low temperatures, *e.g*., in the range of about -108° C to 40° C, more preferably in the range of about -60° C to 30° C. A suitable nonpolar liquid is selected from the group consisting of hexane, carbon tetrachloride, and Galden® HT55.

The method of the invention further includes the step of applying microwave energy to the composition in the reaction vessel while simultaneously circulating the microwave transparent media used as a fluid coolant around the reaction vessel through the cooling jacket.

The method provides maximum flexibility for adding composition to the vessel. Composition may be added before, during, and after cooling the vessel to accommodate temperature-sensitive and temperature-specific stages in a given reaction. For example, this aspect of the method is useful for studying microwave assisted reaction kinetics at different temperatures.

As noted with respect to the instrument embodiments of the invention, the method includes monitoring the temperature of the vessel and the temperature of the compositions within while moderating the application of microwave energy based upon the temperature. This is accomplished using a computer microprocessor controlling the application of microwaves. In this regard, a computer microprocessor can be used to control an electric pump to circulate the microwave transparent media used as a fluid coolant around the reaction vessel. A computer microprocessor may also simultaneously control the application of microwave energy and the electric pump. A computer microprocessor may further monitor the temperature of the compositions in the reaction vessel using a fiber optic temperature sensor and moderate the application of microwave energy based on the temperature detected by the temperature sensor.

Microprocessors are well known in this and other arts to control many types of electronic and mechanical devices. The recent advancement in the application of semiconductor physics and silicon processing to these devices allows for smaller, more powerful microprocessors to control complex machines and processes. Discussions include, but are not limited to Sze, S. M., *Modern Semiconductor Device Physics,* (1998), Wiley-Interscience Publication; and Wolf, S., *Silicon Processing for the VLSI Era*, (1990), Lattice Press.

In yet another embodiment illustrated in FIGS. 1-3, the invention is an instrument 10 for performing low temperature microwave assisted organic synthesis. Additional aspects of the instrument with respect to the instrument 10 are a microwave attenuator 26, a reaction vessel upper portion 50, and a keypad 58.

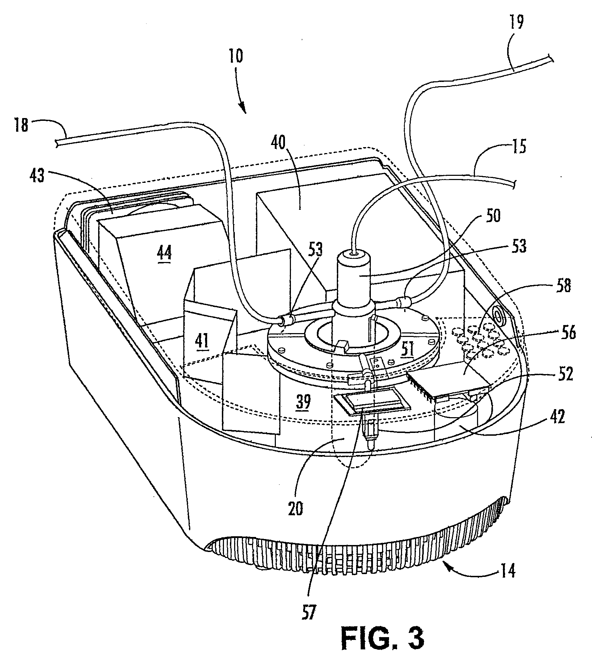

Depicted in FIGS. 1 and 3, the reaction vessel 20 rests within the reaction cavity 39. The reaction vessel 20 is at least partially surrounded by a microwave energy attenuator 26. The attenuator 26 supports portions of the reaction vessel 20 outside of the cavity 39 while preventing microwaves from escaping instrument 10.

FIG. 3 depicts various internal parts of the microwave instrument 10 according to the present invention. In common with FIG. 1, the instrument housing 11 is illustrated. FIG. 3 also illustrates a microwave source 40, a waveguide 41, a stir motor 42, a fan 43 along with the fan housing 44, a reaction cavity 39, a reaction vessel 20, a reaction vessel upper portion 50, and various electronics.

A microwave source 40, as will be known to those of ordinary skill in the art, can be microwave generating devices such as magnetrons, klystrons, and solid state devices. Microwaves travel from the source 40 through the waveguide 41 to the reaction cavity 39. The contents 24 in the reaction vessel 20 absorb the microwave energy 25 as it enters the reaction cavity 39 (See also FIG. 2). In this manner, the reaction cavity 39 is in microwave communication with the microwave source 40.

The waveguide 41 is constructed of a material that reflects microwaves inwardly and prevents them from escaping in any undesired manner. Typically, such material is an appropriate metal which, other than its function for confining microwaves, can be selected on the basis of its cost, strength, formability, corrosion resistance, or any other desired or appropriate criteria. In preferred embodiments of the invention, the metal portions of the waveguide 41 and cavity are formed of stainless steel.

As is the case with other kinds of chemistry, it is advantageous in microwave assisted organic chemistry to stir and mix the composition 24 in the interior reaction chamber 17. This is accomplished, for example, using a motor 42 to drive a magnetic stirrer, such as described in previously mentioned Pub. No. 20030170149.

The fan 43 serves to cool the electronics and the microwave source 40 portions of the instrument 10, as well as helping to keep the reaction cavity 39 from becoming overheated in the presence of ongoing chemical reactions. Other than having the capacity to appropriately cool the instrument and the cavity, the nature or selection of the fan 43 can be left to the individual discretion of those with skill in this art. In a typical embodiment, the fan 43 is mounted in a housing 44 to direct the flow of air across the electronics and the microwave source 40 to cool them more efficiently.

Referring to FIGS. 2 and 3, the cooling jacket 22 surrounds the reaction vessel 20 and cools the vessel 20 to maintain the composition 24 in the vessel 20 at a desired moderate or low temperature even as microwave energy 25 is applied to the composition 24. The cooling jacket top portion 29 includes a cooling jacket ground glass joint 54 for accommodating the reaction vessel 20 therein. The reaction vessel 20 fits within the cooling jacket 22 and seals thereto via the cooling jacket ground glass joint 54. The reaction vessel 20 fits within the cooling jacket 22 such that at least the composition 24 in the interior reaction chamber 17 is submerged in the coolant circulating through the cooling jacket 22.

The reaction vessel 20 is removable from the cooling jacket 22, and may be removed without disrupting coolant flow. The reaction vessel 20 includes an upper portion 50 having a reaction vessel ground glass joint 62 for accommodating additional glassware. The additional glassware includes, but is not limited to, condensers, reagent reservoirs, and other equipment known to one of ordinary skill in the art of microwave assisted organic chemical synthesis. This design provides a controlled, isolated environment for performing low temperature microwave assisted organic chemical synthesis. For example, this instrument will prevent the intrusion of air or water in the interior reaction chamber 17 if such intrusion is detrimental to the completion of the reaction.

The additional glassware permits the condensation of substances from the composition 24 to return to a liquid state. For example, reagents having a low boiling point, such as ammonia, may change phases from a liquid to a gas during the course of a reaction. The condenser will return the gas to a liquid state. Additional glassware will also include devices for adding reagents as a given reaction progresses.

Referring to FIG. 2, the upper portion 50 further includes a cap 55 to secure the cooling jacket 22 and the reaction vessel 20 together. The cap 55 is circular in shape. The cap 55 secures via threads (not shown) on the cooling jacket top portion 29 above the cooling jacket ground glass joint 54. In a preferred embodiment, a glass lip projects from the reaction vessel ground glass joint 62 immediately above the cap 55 to help hold the cap 55 in place when the cap 55 is threaded onto the threads of the cooling jacket top portion 29. Furthermore, reaction vessel 20 is removable from the cooling jacket 22 through the cap 55 without disrupting coolant flow.

In addition, the upper portion 50 is designed to withstand the increased pressure generated by some microwave assisted organic reactions. The upper portion 50 may include a pressure-resistant closure such as described in previously mentioned Publication No. 20030170149. In this embodiment, the upper portion 50 may be held in place on the reaction vessel 39 with a retaining ring 51, and may further include a pressure transducer 52 for sensing the pressure within the interior reaction chamber 17.

Shown in FIG. 3, the cooling jacket 22 will further include a fitting 53 for the supply tube 18 and the vent tube 19 to prevent coolant from leaking. Appropriate fittings are known to those of ordinary skill in the art and include, for example, threaded fittings, valves, quick-connect fittings, and hose clamps.

FIG. 3 further shows the electronics board 56 along with a display 57. The electronics carried by the board 56 are generally well understood in their nature and operation. With respect to the present instrument, the electronics first control the power from a given source, usually a wall outlet carrying standard current. The electronics also control the operation of the device in terms of turning the microwave source 40 on or off, and in processing information received from the ongoing chemical reaction, in particular pressure and temperature. In turn, the processor is used to control the application of microwaves, including starting them, stopping them, or moderating them, in response to the pressure and temperature information received from the sensors previously described. The use of processors and related electronic circuits to control instruments based on selected measured parameters (*e.g*., temperature and pressure) is generally well understood in this and related arts. Exemplary (but not limiting) discussions include Dorf, *The Electrical Engineering Handbook, Second Ed.,* (1997) CRC Press LLC.

Further appreciation of the electronic microprocessor control of the instrument 10 as depicted in FIG. 1 by one of ordinary skill in the art includes the varied placement of the electronic components. For example, the temperature sensor 15 is depicted in FIG. 1 reaching from the upper portion 50 of the reaction vessel 20 placed in the instrument housing 11 to a circuit board (not shown) within the pump housing 12. The circuit board may be located in either housing 11,12 as long as proper communication is established between the electronic components. In this regard, the components of both housings 11,12 could be combined in a single instrument. In present commercial embodiments, such as the previously mentioned DISCOVER™ instrument, The modular nature of the instrument housing 11, however, and its function with other related or complimentary instruments makes it convenient to separate the housings 11, 12. Likewise, the display 57 and keypad 58 may be located in either housing 11,12.

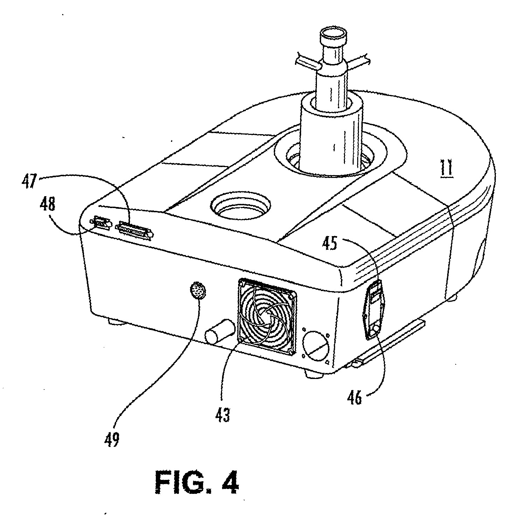

Figure 4 is a rear perspective view of the instrument housing 11 that illustrates some additional items. FIG. 4 illustrates the cooling fan 43, a power switch 45, and a power cord inlet 46. In order to take advantage of the full capacity of the instrument, in preferred embodiments, the instrument includes a parallel port 47 and a serial port 48 for receiving input from or providing output to other electronic devices, particularly microprocessor based devices, such as the pump housing 12 (FIG. 5), personal computers, personal digital assistants or other appropriate devices. Similarly, FIG. 4 illustrates a connector 49 for the pressure transducer 52 previously described.

Figure 5 is a schematic view of the pump housing 12. The pump housing 12 includes a reservoir 59 of microwave transparent media used as a fluid coolant, preferably a reservoir of nonpolar liquid. As noted earlier, nonpolar liquid coolant is preferably selected from the group consisting of hexane, carbon tetrachloride, and Galden® HT55. The pump housing 12 further includes at least one cooling cylinder 60 in the coolant reservoir 59 for cooling the nonpolar liquid. The coolant in the cooling cylinder 60 is preferably at a lower temperature for cooling the nonpolar liquid in the coolant reservoir 59. The coolant in the cooling cylinder 60 is selected from the group consisting of liquid nitrogen and dry ice mixed with a solvent. The dry ice may be mixed with solvents selected from the group consisting of hexane, ethanol, acetone, and methanol.

Referring to FIGS. 2 and 5, the pump housing 12 further includes a pump 61 for supplying fluid coolant from the coolant reservoir 59 to the cooling jacket 22. The pump 61 and the cooling jacket 22 are connected with the previously mentioned supply tube 18. The cooling jacket 22 vents coolant via the previously mentioned vent tube 19 from the cooling jacket 22 to the coolant reservoir 59.

The vent tube 19 includes a sensor (not shown) for monitoring the presence or absence of coolant flow. Furthermore, the temperature of the coolant in the reservoir is continuously monitored by a suitable thermometer (not shown) and the temperature displayed on the pump housing display 63. *See* FIG. 1. Suitable thermometers for measuring the coolant temperature include, but are not limited to, infra red detectors, ultraviolet detectors, and fiber optic sensors.

The pump housing 12 further includes proper insulation to keep the respective coolants from heating. Proper insulating material is known to one of ordinary skill in the art and includes, but is not limited to, styrofoam, foam rubber, and fiberglass. In a preferred embodiment, insulation is included around the supply tube 18, vent tube 19, cooling jacket 22, and the reaction cavity 39.

The instrument and method of the invention is validated with the following examples.

### EXAMPLE 1

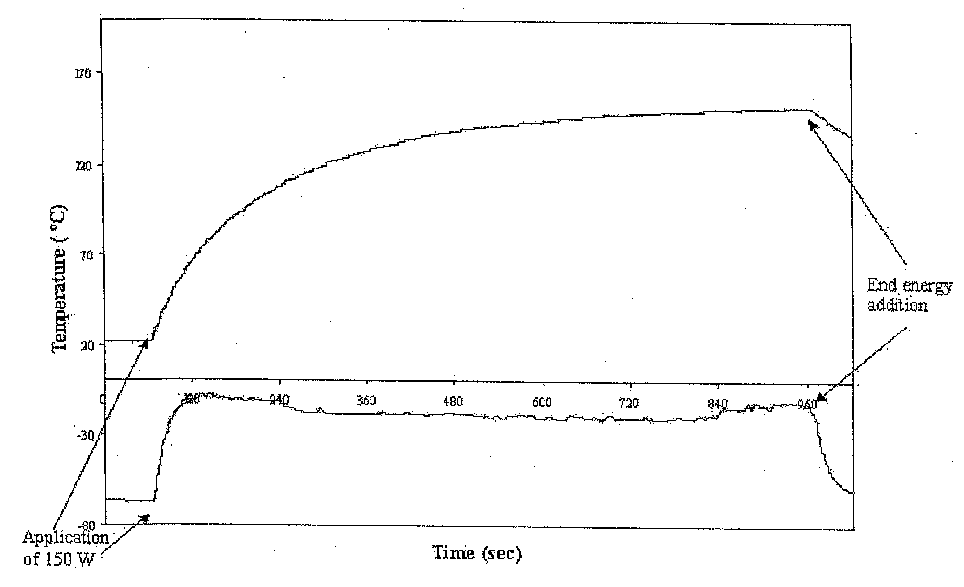

Figure 6 shows a comparison of the solvent DMF exposed to microwave irradiation in the presence and absence of coolant. The vessel was tested by first lowering the temperature of the DMF to -68° C and then irradiating with 150 watts of microwave energy for 15 minutes. In the absence of coolant (upper line), the DMF exceeded 150° C in minutes. In the presence of coolant, however, the DMF temperature was maintained at -20° C (lower line).

### EXAMPLE 2

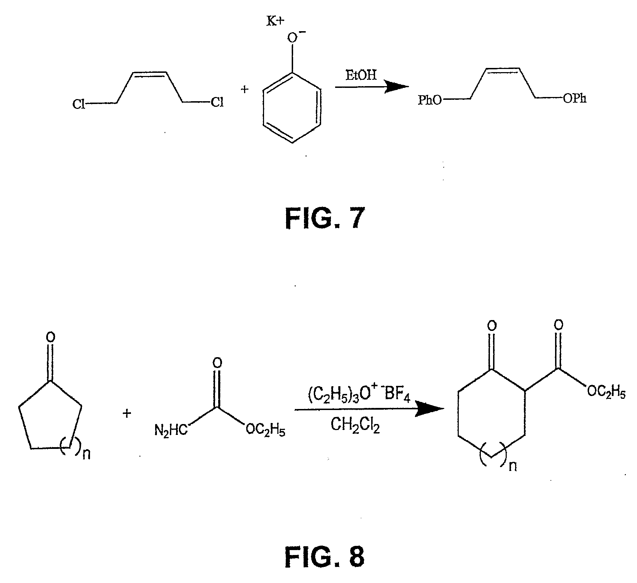

A substitution reaction between a dichlorobutene and a phenoxide anion was performed, where the cis isomer is the desired product. See FIG. 7. Conventionally, this reaction reaches a maximum of 75% yield after a total of 21 hours, as follows. The reaction proceeds for six hours at 0° C, followed by an additional 15 hours at 20° C. Using the instrument and method of the instant invention, the reaction achieved 87% yield after only 35 minutes at 30° C. The reaction time is significantly shorter, and the yield is greater than that achieved via conventional reaction conditions. Replicating the conventional temperature in a microwave did not produce as high of a yield as the microwave reaction at 30 °C. The formation of the cis isomer was confirmed by NMR.

### EXAMPLE 3

Example 3 is a ring expansion reaction. Many ring expansion reactions require low temperatures due to the instability of the intermediate formed or reactivity of the starting materials. Furthermore, they may take several days to perform. The reaction shown in Figure 8 is the formation of a cycloheptanone or cyclohexanone ring derivative. Conventionally, the cycloheptanone reaction achieves 90% yield after four hours at 0° C. Utilizing the instrument and method of the instant invention, the reaction achieves 95% yield in one minute between -45° C and 0° C. The cyclohexanone reaction conventionally achieves 38% yield after four hours at 0° C. Utilizing the instrument and method of the instant invention, the reaction achieves 65% yield in one minute between -45° C and 0° C. The cyclohexanone yield is significantly greater utilizing the instrument and method of the instant invention due to the speed of the microwave assisted conversion of the reactants to products. The slower conventional reaction allows the formation of large molecular weight side products (possibly the result of aldol condensations) that does not occur in the method of the invention.

In the specification and the drawings, typical and preferred embodiments of the invention have been disclosed. Specific terms have been used only in a generic and descriptive sense, and not for purposes of limitation. The scope of the invention is set forth in the following claims.

## Claims

1. An instrument (10) for performing low temperature microwave assisted organic chemical synthesis, said instrument comprising:
a source (40) of microwave radiation;
a cavity (39) in microwave communication with said source (40);
a microwave transparent reaction vessel (20) in said cavity (39);
a cooling jacket (22) surrounding said reaction vessel (20) for cooling said vessel (20) to thereby maintain a composition in said vessel (20) at a desired moderate or low temperature while microwave energy (25) is applied to the composition;
a reservoir (59) of microwave transparent fluid coolant;
means (18) for supplying said fluid coolant from said coolant reservoir to said cooling jacket (22); and
means (19) for venting said fluid coolant from said cooling jacket.

2. The instrument (10) according to Claim 1, further comprising a waveguide (41) connecting said cavity (39) and said microwave source (40).

3. The instrument (10) according to Claim 1 or 2, further comprising:
an opening in said cavity; and
an attenuator (26) in said opening for supporting portions of said reaction vessel (20) outside of said cavity (39) while preventing microwaves from escaping through said opening.

4. The instrument (10) according to Claim 1, 2 or 3, wherein said cooling jacket (22) includes a top portion (50) having a cooling jacket ground glass joint (54) for accommodating said reaction vessel (26) therein.

5. The instrument (10) according to any preceding Claim , wherein said reaction vessel (20) defines an interior reaction chamber (17) for carrying out microwave assisted reactions in said chamber.

6. The instrument (10) according to any preceding Claim, wherein said reaction vessel (20) fits within said cooling jacket (22) such that at least the composition in said vessel is below the coolant level circulating through said cooling jacket (22).

7. The instrument (10) according to any preceding Claim, wherein said cooling jacket (22) further comprises a threaded upper portion (29) for threading a circular cap (55) to secure said cooling jacket (22) and said reaction vessel (20) together.

8. The instrument (10) according to Claim 7, wherein said reaction vessel (20) is removable from said cooling jacket (22) through said cap (55) without disrupting coolant flow.

9. The instrument (10) according to any preceding Claim, wherein said fluid coolant comprises a nonpolar liquid.

10. The instrument (10) according to Claim 9, wherein said nonpolar liquid is selected from the group consisting of hexane, carbon tetrachloride, and polyfluorinated hydrocarbons.

11. The instrument (10) according to Claims 9 or 10, further comprising at least one cooling cylinder (60) in said coolant reservoir (59) for cooling the nonpolar liquid.

12. The instrument (10) according to Claim 11, wherein said cooling cylinder (60) contains a coolant at a lower temperature for cooling the nonpolar liquid in the coolant reservoir (59).

13. The instrument (10) according to Claims 11 or 12, wherein said coolant in said cooling cylinder (60) is selected from the group consisting of liquid nitrogen and mixtures of dry ice and liquids.

14. The instrument (10) according to Claim 13 wherein said dry ice mixture includes a liquid selected from the group consisting of hexane, ethanol, acetone, and methanol.

15. The instrument (10) according to any preceding Claim, wherein said coolant supplying means comprises a pump (61).

16. The instrument (10) according to Claim 15, wherein said pump (61) is in communication with said reservoir (59) and said cooling jacket (22) for circulating fluid coolant from said fluid coolant reservoir (59) through said cooling jacket (22) and around said reaction vessel (20).

17. The instrument (10) according to Claims 15 or 16, wherein said coolant supplying means (18) comprises a tube in physical communication with said cooling jacket (22) and with a coolant reservoir (59).

18. The instrument (10) according to any preceding Claim, wherein said coolant venting means (19) comprises a vent tube from said cooling jacket (22) to said coolant reservoir (59).

19. The instrument (10) according to Claim 18, comprising a sensor in said vent tube (19) for detecting the presence or absence of coolant flow.

20. The instrument (10) according to any preceding claim, comprising a thermometer about said reservoir (59) for measuring the temperature of the microwave transparent fluid coolant.

21. The instrument (10) according to Claim 20, wherein thermometers comprise infrared detectors, ultraviolet detectors, and fiber optic sensors.

22. A method for microwave assisted low temperature chemical reactions, comprising the steps of:
a) cooling a microwave transparent reaction vessel (20) to a desired temperature by contacting the reaction vessel (20) with a microwave transparent media used as a fluid coolant; and
b) applying microwave energy (25) to the composition in the reaction vessel (20) while simultaneously circulating the microwave transparent media used as a fluid coolant around the reaction vessel (20).

23. The method of Claim 22 comprising cooling the vessel (20) and thereafter adding a composition to the cooled vessel.

24. The method of Claim 22 comprising adding a composition to the vessel (20) and thereafter cooling the vessel.

25. The method of Claim 22 comprising adding a composition to the vessel (20) while cooling the vessel.

26. The method of Claim 22 wherein the step of contacting the vessel (20) with the coolant comprises contacting the vessel (20) with a nonpolar liquid.

27. The method of Claim 26 comprising contacting the vessel (20) with a nonpolar liquid selected from the group consisting of hexane, carbon tetrachloride, and polyfluorinated hydrocarbons.

28. The method of Claim 22 wherein the step of contacting the vessel (20) with fluid coolant comprises surrounding the vessel with coolant.

29. The method of Claim 22 comprising circulating the microwave transparent media used as a fluid coolant around the reaction vessel (20) using an electric pump (61).

30. The method of Claim 22 comprising monitoring the temperature of the compositions in the reaction vessel (20) and moderating the application of microwave energy (25) based on the monitored temperature.

31. The method of Claims 22-30 comprising using a fiber optic temperature sensor (15) to monitor the temperature of the compositions.

32. The method of Claims 22-31 comprising controlling the application of microwaves using a microprocessor (56).
